# EUROPÄISCHE PATENTANMELDUNG

(11) **EP 0 749 896 A2**
(43) Veröffentlichungstag der Anmeldung: **27.12.1996**
(21) Anmeldenummer: 96110062.5
(22) Anmeldetag: 21.06.1996
(51) Int. Cl.: B65B 9/04, B65B 69/00

(54) **Verfahren und Vorrichtung zum Verpacken und/oder Auspacken von Portionen eines tiefgekühlten Lebensmittels**

(30) Priorität: 22.06.1995 DE 19522639
(71) Anmelder: Schöller Lebensmittel GmbH & Co. KG, D-90419 Nürnberg (DE)
(72) Erfinder: Beer, Richard, 90451 Nürnberg (DE)
(74) Vertreter: Körber, Wolfhart, Dr. rer.nat.

(57) **Zusammenfassung**

Die vorliegende Erfindung bezieht sich auf ein Verfahren zum Verpacken von tiefgekühltem Lebensmittel, insbesondere Speiseeis, in eine bandförmige Verpackung (14), bei dem das Lebensmittel erst portioniert und dann die Portionen in einer Reihe hintereinander mit der bandförmigen Verpackung (14) zusammengeführt und von dieser umhüllt werden, wobei die Portionen des Lebensmittels in Längsabständen voneinander zwischen zwei getrennte Verpackungsstreifen (9, 10) aus folienartigem Material eingeführt werden, die danach zur Bildung der bandförmigen Verpackung (14) zusammengeführt werden. Die vorliegende Erfindung umfaßt weiterhin eine Vorrichtung zum Durchführen des Verfahrens, sowie die bandförmige Verpackung selber. Außerdem betrifft die vorliegende Erfindung ein Verfahren und eine Vorrichtung zum Auspacken von Portionen von tiefgekühltem Lebensmittel.

## Beschreibung

Die Erfindung bezieht sich auf Verfahren und Vorrichtungen nach den Oberbegriffen der Ansprüche 1, 8, 11, 13 und 15.

Bei der Verpackung und auch bei einer späteren Auspackung von gekühltem oder tiefgekühltem Lebensmittel sind bedeutende Forderungen zu erfüllen, nämlich die Forderung nach einer guten und sicheren Funktion und die Forderung nach einer das Lebensmittel schonenden Funktion, bei der das Lebersmittel sowohl in geschmacklicher als auch in hygienischer Hinsicht unbeeinträchtigt bleiben soll. Darüber hinaus besteht für beide vorgenannten Funktionen die Forderung nach einer guten Wirtschaftlichkeit, da anderenfalls das Lebensmittel auf dem Markt nicht vertrieben werden kann.

Die vorbeschriebenen Forderungen gelten insbesondere für Speiseeis, das sowohl in Gaststätten als auch an öffentlichen Verkaufsstellen abgegeben werden soll.

Zur Herstellung von Eisbechern in der Gastronomie wird Eis verschiedener Geschmacksrichtungen jeweils aus 5-6 Liter-Behältern von Hand entnommen, portioniert und dann z. B. mit Früchten und/oder Sahne zu Eisbechern vervollständigt.

In der Gastronomie werden die Eisbehälter in der Regel mit Einsätzen in einer Kühltruhe aufbewahrt, sodaß zur Entnahme von Eis lediglich die Deckel der Behälter aufgeklappt bzw. abgenommen werden müssen. Die benötigte Menge Eis wird dann entnommen und ausportioniert, woraufhin die Behälter wieder verschlossen werden. Meist werden im Straßenverkauf die Eisbehälter nicht jedesmal wieder verschlossen, sondern offengelassen. Die Entnahme und das Portionieren des Eises von Hand ist einerseits sehr arbeits- und personalaufwendig, andererseits auch mit einer beträchtlichen Belastung für das Speiseeis verbunden, da durch die oftmalige Temperaturänderung an den Behältern die Qualität des Speiseeises negativ beeinflußt wird. Da der Personaleinsatz in der Gastronomie aus Kostengründen immer stärker minimiert wird, wird immer weniger Speiseeis als Dessert angeboten. Außerdem ist es auch notwendig, das Speiseeis sofort nach dem Portionieren zu servieren, da es bei längerem Stehen schmilzt und nicht mehr die Qualität hat, die der Gast wünscht.

In Selbstbedienungsrestaurants wird Speiseeis in Eisbechern fast überhaupt nicht angeboten, da hier eine Person zur Verfügung stehen muß, die das Speiseeis zu den jeweiligen vom Kunden gewünschten Eisbecher zusammenstellen müßte. Gerade in Selbstbedienungsrestaurants ist jedoch die Personaleinsparung eines der Hauptziele. Auch industriell hergestelltes und verpacktes Speiseeis wird von den Kunden der Selbstbedienungsrestaurants nicht angenommen.

Es ist auf dem Markt bereits ein sog. Softeis angeboten und vertrieben worden, das aus einem flexiblen Behälter in einem Eisautomaten abgegeben wird. Derartiges Eis hat eine verhältnismäßig weiche Konsistenz und verläßt den Abgabeautomat an einer zu öffnenden und wieder zu schließenden Düse, von der das Eis in einen darunter zu stellenden Becher gelangt. Eine solche Abgabevorrichtung ist zum einen auf die Abgabe von Speiseeis weicher Konsistenz beschränkt. Deshalb muß ein solches Speiseeis entweder auch bei tieferen Temperaturen eine weiche Konsistenz haben oder muß bei einer zwar gekühlten, jedoch höheren Temperatur abgegeben werden, da anderenfalls die Abgabevorrichtung nicht funktioniert. Außerdem sind dies bekannte Verfahren und dieses bekannte Abgabegerät aus hygienischen Gründen bedenklich, weil am Ventil oder einer ihm nachgeordneten Düse ein Eisrest verbleibt, der bei Erwärmung insbesondere nach längeren Zeitintervallen verderben kann, wodurch Beeinträchtigungen der nächsten abzugebenden Eisportion und der Gesundheit des Verzehrers nicht ausgeschlossen werden können.

In der WO 93/20712 sind ein Verfahren und eine Vorrichtung zur Abgabe von definierten Portionen von Speiseeis oder dgl. beschrieben. Das Speiseeis wird in einen Schlauch gefüllt, der spulenförmig aufgewickelt wird und zum Bilden und zum Abgeben der Portionen von der so gebildeten Spule abgezogen wird. Dabei gelangt der gefüllte Schlauch zunächst zwischen einem Paar Vorquetschrollen und dann zu einem Paar Abquetschrollen, an denen eine Portion innerhalb der Schlauchhülle abgequetscht wird. Unmittelbar hinter den Abquetschrollen sind sich gegenüberliegende Trennmesser zum Aufschneiden des Schlauches in zwei Schlauchhälften angeordnet. Außerdem befinden sich zu beiden Seiten der Trennvorrichtung zwei Aufwickelspulen zum Aufwickeln der getrennten Schlauchhälften. Bei der Anordnung gemäß Fig. 10 gelangt der Schlauch in eine von oben nach unten gerichteten Bewegung zu den Abquetschrollen, wobei durch das Spreizen der seitlich abgezogenen Schlauchhälften die abgequetschte Portion vom Schlauch getrennt wird und in einen darunter gestellten Eisbecher fällt. Dies bekannte Verfahren und diese bekannte Vorrichtung sind ebenfalls auf die Abgabe eines Speiseeises beschränkt, das von einer im Schlauch leicht verformbaren Konsistenz ist, da anderenfalls ein Trennen der Portionen im Schlauch nicht möglich ist. Außerdem ist es schwierig, besondere Formen der Portionen, insbesonderen Kugeln, herzustellen. Ein weiterer Nachteil besteht darin, daß eine Berührung der Messer der Trennvorrichtung mit dem Speiseeis nicht verhindert werden kann und deshalb auch bei diesen bekannten Maßnahmen Speiseeisreste an den Abgabeteilen der Abgabevorrichtung verbleiben können, die nachfolgende Portionen aus den vorgenannten Gründen beeinträchtigen können.

Die vorbeschriebenen Nachteile gelten auch für ein bekanntes Verfahren und eine bekannte Vorrichtung, die in der WO 94/05162 beschrieben sind. Bei diesem Stand der Technik werden Portionen von Speiseeis am Ende eines Schlauches aus flexiblem Material abgequetscht, durch den Quetschvorgang in Kugeln geformt und gleichzeitig aus dem Schlauchende hinausgedrückt, wobei die Resthülle danach abgeschnitten wird. Auch bei diesem Stand der Technik kann Resteis an Teilen der Quetsch- und der Abschneidevorrichtung nicht vermieden werden, wodurch die vorbeschriebenen Nachteile auch bei diesem Stand der Technik vorgegeben sind. Da außerdem Eis weicher Konsistenz verwendet werden muß, um es überhaupt durch Quetschen formen zu können, ist eine zuverlässige Herstellung der Kugelform mit diesem Verfahren nicht möglich.

Ein Verfahren nach dem Oberbegriff des beigefügten Anspruches 1 ist in der US 2,563,278 beschrieben. Bei diesem Stand der Technik wird im Bereich einer Füllstation eine schlauchförmige Verpackungshülle aus einer flachen Verpackungsfolie geformt und gleichzeitig Speiseeis portionsweise in die Verpackungshülle eingeführt. Hinter jeder Portion werden die beiden aufeinanderliegenden Wände der Verpackungshülle aufeinandergepreßt bzw. gequetscht, sodaß die Portionen dicht verpackt und voneinander getrennt sind. Die Verpackung bildet ein girlandenförmiges Zwischenprodukt. In Durchgangsrichtung hinter der soweit beschriebenen Verpackungsvorrichtung wird das bandförmige Zwischenprodukt mittels einer Schereneinrichtung in einzelne nunmehr verpackte Portionen zerschnitten, in eine Gefrierkammer geführt und dann in einem Lager- und Transportbehälter verpackt. Auch diesem Stand der Technik haften die vorbeschriebenen Nachteile an.

Bei den obenbeschriebenen Vorrichtungen wird Speiseeis unter Druck aus Schläuchen abgegeben. Deshalb muß das Eis eine Temperatur zwischen -10 bis -12°C haben, um genügend viskos zu sein. Die ideale Lagertemperatur für Eis liegt aber bei ca. -18 °C, sodaß bei höheren Temperaturen wie -10 °C die mögliche Lagerzeit des Eises stark verkürzt wird.

In der GB 2,139,337 A ist eine Verpackung für Eisportionen nach dem Oberbegriff des beigefügten Anspruches 8, sowie ein Verfahren zum Verpacken der Portionen beschrieben. Als Verpackung werden zwei plattenförmige Verpackungsstücke verwendet, die jeweils gegensinnig halbkreisförmig ausgebauchte Aufnahmeräume in mehreren, sich parallel zueinander streckenden Reihen für die Eisportionen aufweisen. Das Speiseeis wird in pastösem Zustand in die halbkugelförmigen Aufnähmeräume eingefüllt. Dann werden zwei gefüllte Verpackungsstücke flach aufeinandergesetzt und in einem Gefrierbad gefroren, wobei die vorgeformten Eiskogelhälften miteinander verbunden werden. Dann werden die so gebildeten Verpackungen in einem Gefrierschrank gelagert. Zum Öffnen der Verpackung sind die beiden Verpackungsplatten voneinander zu trennen. Für Einzelportionen können die Platten zerschnitten werden. Dies bekannte Verfahren ist sowohl bei der Herstellung der Verpackung als auch bei der Abgabe der Portionen mit einem großen Handhabungs- und Herstellungsaufwand verbunden, so daß die eingangs beschriebenen Handhabungs- und Personalprobleme bestehen und eine kostengünstige Herstellung und Abgabe der Portionen nicht möglich ist.

Der Erfindung liegt die Aufgabe zugrunde, ein Verfahren und eine Vorrichtung der eingangs angegebenen Arten so weiterzubilden, daß eine einfache, billig herzustellende, hygienische und zuverlässige Verpackung, die auch die Aufnahme vorgeformter Porionen ermöglicht, und/oder eine automatisierte, hygienische und einfache Abgabe, sowie eine möglichst lange Aufbewahrungszeit der Portionen gewährleistet ist.

Diese Aufgabe wird durch die Merkmale der Ansprüche 1, 8, 11, 13 oder 15 gelöst.

Bei dem erfindungsgemäßen Verfahren nach Anspruch 1 werden die Portionen des Lebensmittels in Längsabständen voneinander zwischen zwei getrennte Verpackungsstreifen aus folienartigem Material eingeführt, die danach zur Bildung der bandförmigen Verpackung zusammengeführt werden. Hierdurch kann ein vorportioniertes Lebensmittel, wie z.B. vorzugsweise Speiseeis, sowohl weicher als auch fester Konsistenz problemlos und wirtschaftlich verpackt werden. Vorzugsweise wird das Lebensmittel bzw. das Speiseeis vor dem Verpacken geformt, z.B. in Kugeln. Dadurch können individuelle Formen für die Portionen verwirklicht werden, die unabhängig sind von einer gemeinsamen Verformung der Verpackung und der Portionen, wie es beim Stand der Technik der Fall ist. Es ist beispielsweise möglich, spezielle Formen für Kinder herzustellen.

Es ist besonders vorteilhaft, ein mit Aufnahmekammern vorgefertigtes Verpackungsmaterial zu verwenden wobei die Portionen in die Aufnahmekammern entweder vorgeformt eingeführt oder in den vorgeformten Aufnahmekammern geformt werden können. Dabei können beide Verpackungsstreifen Aufnahmekammern aufweisen, oder nur einer der Verpackungsstreifen. Das Verpackungsstreifen können in einer bevorzugten Ausführung eine derartige Breite aufweisen, daß die Portionen des Lebensmittels in mehreren Reihen nebeneinander verpackt und erst danach in einzelne Reihen zerschnitten werden.

Das erfindungsgemäße Verfahren läßt sich kontinuierlich durchführen und zeichnet sich durch Einfachheit und eine große Leistungsfähigkeit aus, so daß das Lebensmittel, insbesondere Speiseeis rationell verpackt werden kann.

Die Erfindung bezieht sich gemäß Anspruch 13 auch auf ein Verfahren zum Auspacken wenigstens einer Portion aus der bandförmigen Verpackung. Bei diesem Verfahren wird die Verpackung dadurch aufgerissen, daß zwei längsgeteilte Verpackungsstreifen aus folienartigem Material gespreizt werden. Dabei wird die jeweilige Portion entweder in vertikal oder schräg nach unten gerichteter Zuführungsbewegung freigegeben, so daß sie vertikal oder in leichter Bogenbewegung aufgrund der Gravitation selbsttätig in ein Empfangsgefäß fällt ohne mit einem Bauteil der Zuführungs- oder Abgabevorrichtung in Berührung zu gelangen. Bei diesem Verfahren ist eine hygienische Behandlung und Abgabe der Portion gewährleistet, weil die Portion abgegeben werden kann, ohne mit einem Bauteil des zugehörigen Abgabegerätes in Berührung zu kommen.

Die erfindungsgemäßen Vorrichtungen zur Durchführung der Verfahren zeichnen sich durch einfache und kleine sowie handhabungsfreundlich bedienbare Bauweisen aus, die sich einfach und kostengünstig herstellen lassen und von sicherer Funktion sind.

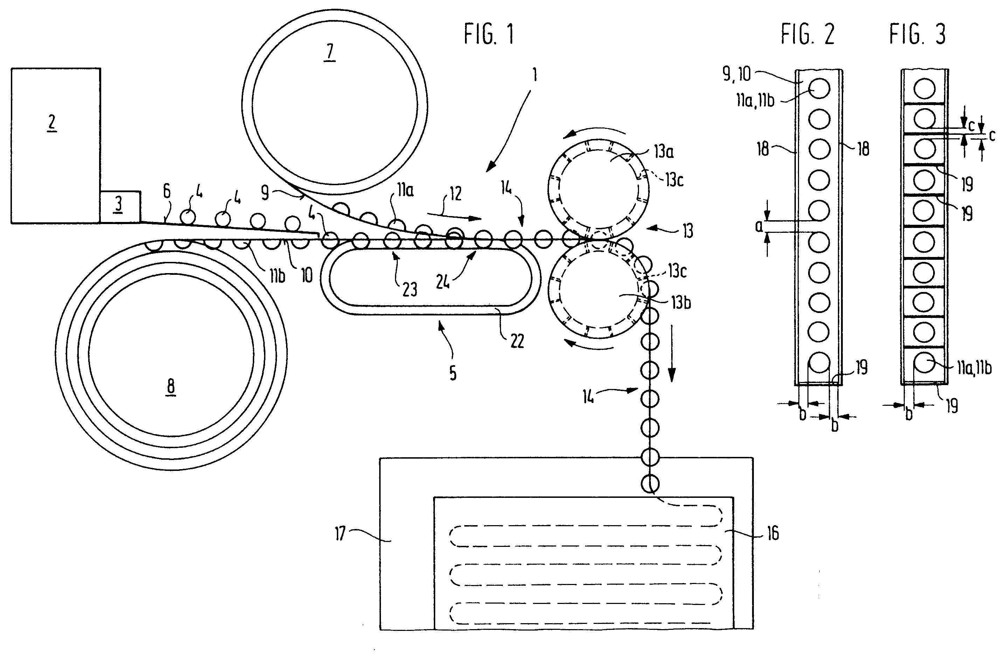

Nachfolgend werden die Erfindung und weitere durch sie erzielbare Vorteile anhand bevorzugter Ausführungsbeispiele und vereinfachten Zeichnungen näher erläutert. Es zeigen
- Fig. 1: eine erfindungsgemäße Vorrichtung zum Verpacken von Portionen von Speiseeis in eine bandförmige Verpackung in der Seitenansicht;
- Fig. 2: eine bandförmige Verpackung in der Draufsicht;
- Fig. 3: eine bandförmige Verpackung in abgewandelter Ausgestaltung in der Draufsicht;
- Fig. 4: ein erfindungsgemäßes Abgabegerät für Portionen von Speiseeis in perspektivischer Vorderansicht; und
- Fig. 5: das Abgabegerät im vertikalen Schnitt.

Die Hauptteile der Vorrichtung 1 zum Verpacken sind eine Eismaschine 2 (Freezer), der eine Formvorrichtung 3 zum Formen von Eisbällen 4 zugeordnet ist, eine Verpackungsstation 5, der die bereits gefrorenen Eiskugeln 4 mittels einer die Formvorrichtung 3 mit der Verpackungsstation 5 verbindenden Zuführungsvorrichtung 6 zugeführt werden, eine obere und eine untere Vorratsrolle 7, 8 für einen oberen und einen unteren bandförmigen Verpackungsstreifen 9, 10 aus folienartigem Material, vorzugsweise aus einem biegsamen Kunststoff, eine der Verpackungsstation 5 in Durchgangsrichtung 12 nachgeordnete Verbindungsvorrichtung 13 zum Verbinden der beiden Verpackungsstreifen 9, 10 zu einer bandförmigen Verpackung 14 und eine Abgabe- und Lagervorrichtung zum Abgeben und Lagern der bandförmigen Verpackung 14, die durch eine angetriebene Aufwickelrolle oder durch einen Aufnahmekasten 16 gebildet sein kann. Letzterer kann z. B. durch einen Karton gebildet sein, in dem die bandförmige Verpackung 14 z. B. in übereinander angeordneten mäanderförmigen Lagen verpackt und gelagert werden kann. Der Aufnahmebehälter 16 oder die gesamte Vorrichtung 1 befindet sich in einem Gefrierschrank 17, in dem vorzugsweise mehrere Aufnahmekästen 16 bei Anordnung nebeneinander befüllbar und lagerbar sind. Diese Aufnahmekästen 16 können gleichzeitig die Versand- und Verkaufskartons sein, die in die Verkaufsautomaten eingesetzt werden.

Bei der erfindungsgemäßen Vorrichtung können die portionierten und vorzugsweise auch vorgeformten Eiskugeln mit einer Temperatur von bis zu -30 °C in die Verpackung eingeführt werden. Eine Voraussetzung ist, daß sie stabil genug sind, um sich in den Verpackungsstreifen nicht noch einmal zu verformen oder zu verkleben. Die dafür erforderliche Temperatur der Verpackung und der Eiskugeln liegt bei etwa -18 bis -20 °C.

Bei der Verbindungsvorrichtung 13 kann es sich um eine Schweißvorrichtung mit aneinander abrollenden Schweißrädern 13a, 13b oder Schweißradpaaren handeln, die die beiden Verbindungstreifen 9, 10 im Bereich ihrer Längsränder bzw. zwischen den Reihen der Portionen durch längs durchgehende Schweißnähte oder Schweißlinien 18 miteinander verbindet.

Die Länge einer bandförmigen Verpackung 14 ist durch die Kapazität des Aufnahmebehälters 16 oder der noch zu beschreibenden Abgabevorrichtung bestimmt. Es ist im Rahmen der Erfindung möglich und vorteilhaft, an den Enden der bandförmigen Verpackung 14 auch querverlaufende Verbindungsnähte, insbesondere Schweißnähte 19 anzubringen, die sich von der einen bis zur anderen Schweißnaht 18 erstrecken und somit einen die Eisbälle 4 aufnehmenden Innenraum dicht verschließen und somit vor Verunreinigungen schützen. Es ist auch möglich und vorteilhaft, weitere Quer-Verbindungsnähte, insbesondere Schweißnähte 19 zwischen Aufnahmeabschnitten anzubringen. Hierdurch wird jede darin aufgenommene Eiskugel 4 gegen seine Umgebung dicht verschlossen.

Die Verpackungsstreifen bestehen aus einem folienartigen Material, sind also biegsam. Wenn die Verpackungsstreifen 9, 10 aus einer dünnen, dehnbaren oder schrumpfbaren Folie bestehen, können die Verpackungsstreifen 9, 10 flache Streifen sein. Es ist jedoch vorteilhaft, in gleichen Abständen a voneinander in einem oder in beiden Verpackungsstreifen 9, 10 z. B. durch Tiefziehen vorgefertigte Aufnahmekammern 11a, 11b zu ordnen, deren Form und Größe an die der Eisportionen, hier Kugeln 4, angepaßt oder etwas größer ist. Im gezeigten Beispiel werden die Eisportionen in einer Reihe hintereinander in der bandförmigen Verpackung verpackt. Es können aber auch mehrere Reihen von Eisportionen nebeneinander in der bandförmigen Verpackung verpackt werden.

Im Bereich der Verpackungsstation 5 kann in vorteilhafter Weise ein die Verbindungsstreifen 9, 10 unterstützendes und in der Durchgangsrichtung 12 umlaufendes Transportband 22 vorgesehen sein, in dem vorzugsweise Ausnehmungen für die unteren Aufnahmekammern 11b vorgesehen sind, deren Abmessungen und Abstände an die Abmessungen und Abstände der Aufnahmekammern 11b angepaßt sind. Es ist vorteilhaft, die Umfangsgeschwindigkeiten der Schweißräder 13a, 13b und die aufgrund des sich jeweils verändernden Durchmessers unterschiedliche Abzugsgeschwindigkeit der Ab- und Aufwickelrolleen aneinander anzupassen. Die Vorratsrollen 7, 8 können ggf. leicht gebremst frei drehbar sein. Alle Rollen sind austauschbar an nicht dargestellten Lagervorrichtungen gelagert.

Im halb- oder vollautomatischen Verpackungsbetrieb werden die Eiskugeln 4 mittels der Zuführungsvorrichtung 6 zur Verpackungsstation 5 gefördert und in die unteren Aufnahmekammern 11b des diskontinuierlich oder vorzugsweise kontinuierlich in die Durchgangsrichtung 12 bewegten unteren Verpackungsstreifen 10 einlegt, wobei der obere Verpackungsstreifen 9 mit gleicher Geschwindigkeit und in einer solchen Position vorbewegt wird, daß die Aufnahmekammern 11a, 11b im Bereich der Zusammenführung 23 übereinander stehen und bei aufeinanderliegenden Verpackungsstreifen 9, 10 eine gemeinsame Aufnahmekammer 24 für die jeweils aufgenommene Eiskugel 4 bilden. Nachfolgend werden im Bereich der Verbindungsvorrichtung 13 die längsverlaufenden Verbindungsnähte, hier die Schweißnähte 18 kontinuerlich mit den Schweißrädern 13a, 13b angebracht. Sofern dies vorgesehen ist, können die quer verlaufenden Verbindungsnähte, hier die Schweißnähte 19, diskontinuierlich durch an den Schweißrädern 13a, 13b angebrachte quer verlaufende obere und untere Schweißschienen oder Schweißkanten 13b, 13c angebracht werden. Das Schweißen der Verpackungsstreifen 9, 10 muß so erfolgen, daß diese im Verkaufs- bzw. Abgabeautomat wieder leicht getrennt und auseinandergezogen werden können, damit die Eisportionen ohne Probleme herausfallen. Alternativ ist auch eine Kaltsiegelbeschichtung zur Verbindung der Verpackungsstreifen 9, 10 möglich. Die Verbindungsnähte 18, 19 können auch durch jeweils zwei parallele beabstandete Verbindungsnähte gebildet sein. Das ist von Vorteil, wenn die Verpackung nachfolgend in Einzelportionen aufgeteilt werden soll, da in diesem Fall die Verpackung lediglich zwischen den zwei parallelen beabstandeten Verbindungsnähten zerschnitten bzw. getrennt werden muß.

Um eine ggf. stattfindende Wärmeleitung auf die Aufnahmekammer 11a, 11b und auf die Kugeln 4 zu verhindern oder zu verringern ist es vorteilhaft, die Schweißnähte 18, 19 in einem Längs- bzw. Querabstand b, c von den Aufnahmekammern 11a, 11b oder - falls vorgeformte Aufnahmekammern fehlen - von den Kugeln 4 bzw. Portionen anzubringen.

Sofern mehrere Sorten oder Geschmacksrichtungen des Speiseeises verpackt werden sollen, ist die Eismaschine 2 mit entsprechend anderen Eiszutaten zu versorgen oder es können auch mehrere Eismaschinen 2 für unterschiedliche Eissorten und gegebenenfalls auch mehrere Verpackungsvorrichtungen 1 vorgesehen sein.

Die Aufnahmebehälter 16 sind zugleich Transportbehälter, die bei Bedarf in Transportfahrzeugen mit tiefgekühltem Frachtraum zu vorhandenen Abgabegeräten 30 transportiert werden, die am Verbraucherort aufgestellt sind, z. B. eine Gaststätte.

Das Abgabegerät 30 weist ein quaderförmiges Gehäuse 30a auf, in dem eine Gefrierkammer 32 angeordnet ist, in der durch eine verschließbare Beschickungsöffnung 30b wenigstens ein, vorzugsweise mehrere Aufnahmebehälter 16, insbesondere im unteren Bereich der Gefrierkammer 32 einstellbar sind. Hierbei kann es sich um Aufnahmebehälter 16 handeln, die eine bandförmige Verpackung 14 mit gleichem oder unterschiedlichem Speiseeis, insbesondere unterschiedlichen Geschmacksrichtungen, enthalten. Insbesondere im zuletzt genannten Fall sind die Mehrzahl Aufnahmebehälter 16 in einer parallel zur Bedienungsseite 33 des Abgabegerätes 30 verlaufenden Reihe angeordnet. Die Beschickungsöffnung 30b ist hier der Einfachheit halber an der Vorderseite des Agabeberätes 30 dargestellt. Vorzugsweise befindet sie sich jedoch auf der Rückseite, sodaß die Beschickung des Abgabegerätes mit neuen Aufnahmebehältern von hinten erfolgt. Das Abgabegerät ist vorzugsweise vollständig thermisch isoliert.

Vorzugsweise oberhalb des oder der Aufnahmebehälter 16 ist jeweils eine Zuführungsvorrichtung 34 für eine zugehörige bandförmige Verpackung 14 angeordnet, die die bandförmige Verpackung 14 in den Bereich oberhalb einer nach unten ausmündenden, zugehörigen Abgabeöffnung 35 befördert, die vorzugsweise durch ein Verschlußelement, hier ein horizontal verschiebbarer Schieber 36 zu öffnen und zu schließen ist.

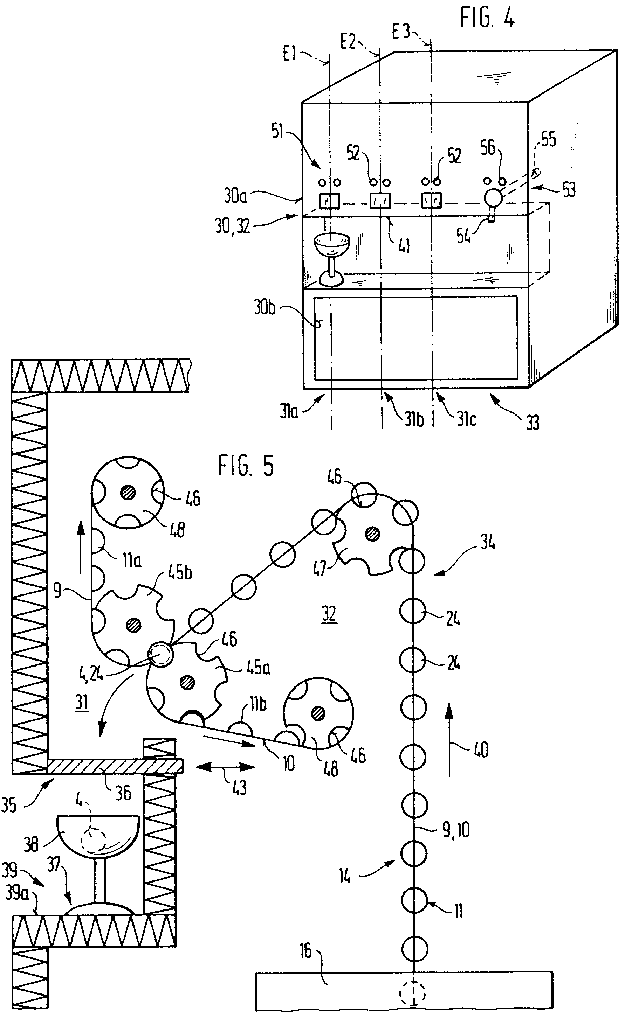

Bei der vorliegenden Ausgestaltung befindet sich die Abgabeöffnung 35 im oberen Bereich des Gehäuses 30a an dessen Vorderseite, nämlich an der Bedienungsseite 33. Vorzugsweise ist unterhalb der Abgabeöffnung 35 ein Stellplatz 37 für einen Eisbecher 38 vorgesehen, der bei der vorliegenden Ausgestaltung im Bereich einer frontseitigen Ausnehmung 39 mit einem horizontalen Boden 39a angeordnet ist. In der vorzugsweise ebenfalls horizontalen, die Ausnehmung 39 übertragenden Deckenwand 41 des Gehäuses 30a ist die zugehörige Abgabeöffnung 35 angeordnet. Wie aus Fig. 3 zu entnehmen ist, ist der Schieber 36 zwischen einer in das Gehäuse eingeschobenen Freigabestellung und einer ausgeschobenen, die Abgabeöffnung 35 verschließenden Schließstellung durch einen nur andeutungsweise dargestellten Antrieb 43 verschiebbar.

Die Zuführungsvorrichtung 34 weist zwei Transporträder 45a, 45b auf, die oberhalb der Abgabeöffnung 35 in der Gefrierkammer 32 einander gegenläufig drehbar gelagert und durch eine nicht dargestellten Drehantrieb jeweils mit gleicher Umfangsgeschwindigkeit antreibbar sind. Die Transporträder 45a, 45b sind an ihren Umfangsflächen durch Formvorsprünge und Formausnehmungen so an die Außenflächen der Verbindungsstreifen 9, 10 angepaßt, daß sie im Sinne von Zahnrädern formschlüssig zwischen die Aufnahmekammern 11a, 11b greifen und die bandförmige Verpackung 14 zwischen sich nach unten vorbewegen können. Die Bewegungsrichtung kann vertikal oder schräg nach unten sein, wie es Fig. 4 zeigt. Vor den Transporträdern 45a, 45b, von denen wenigstens eines antreibbar ist, ist in einem vorzugsweise nach hinten gerichteten Abstand ein Hilfstrarsportrad 47 um eine parallele Drehachse frei drehbar gelagert, das an seinem Umfang gleiche oder ähnliche Formvorsprünge und Formausnehmungen 46 aufweisen kann. Bei einer axialen Betrachtung sind zu beiden Seiten der jeweiligen Zuführungsebene E1, E2, E3 jeweils zwei Aufwickelrollen 48 um sich parallel erstreckende Drehachsen drehbar gelagert, die entsprechende Formausnehmungen 46 aufweisen und jeweils oder durch einen gemeinsamen Antrieb im Sinne der Förderrichtung 40 einander entgegengesetzt antreibbar sind und mit einer Befestigungseinrichtung zum Befestigen eines zugehörigen Verbindungsstreifens 9, 10 ausgerüstet sind. Die Transportrollen 45a, 45b, die Hilfsrolle 47 und die Aufwickelrollen 48 sind in der jeweiligen sich rechtwinklig zur Bedienungsseite 33 erstreckenden Zuführungsebene E1, E2, E3 über einen zugehörigen Aufnahmebehälter 16 angeordnet, von dem eine zugehörige bandförmige Verpackung 14 nach oben und nach vorne in den Bereich oberhalb der Abgabeöffnung 35 transportiert werden kann. Eine solche Anordnung ermöglicht in platzsparender Bauweise mehrere Abgabevorrichtungen 31a, 31b, 31c nebeneinander im Gehäuse 30a, mit denen wahlweise Eis unterschiedlichen Geschmacks oder unterschiedlicher Sorte zur zugehörigen Abgabeöffnung 35 förderbar ist.

Dem Abgabegerät 30 ist eine elektromechanische Steuereinrichtung zugeordnet, die es ermöglicht, ein oder mehrere Portionen eines wahlweisen Speiseeises unterhalb der Abgabeöffnung 35 in Empfang zu nehmen. Dabei kann der Steuereinrichtung eine nicht dargestellte Münzvorrichtung so zugeordnet sein, daß eine Einschaltung einer Abgabevorrichtung 31 nur nach Einwurf einer entsprechenden Münze oder Chips möglich ist. Des weiteren kann eine Wähleinrichtung 51 vorgesehen sein, mit der die Anzahl der gewünschten Portionen bestimmbar ist. Zur Einleitung einer Abgabe kann ein Betätigungselement 52 vorgesehen sein, das die Steuereinrichtung zur Abgabe einer oder mehrerer Eisportionen, hier Eiskugeln 4, betätigt.

Zur Funktionsvorbereitung der Abgabeeinrichtung A ist bzw. sind die bandförmigen Verpackungen 14 über das Hilfstransportrad 47 zu legen und mit einer ersten gemeinsamen Aufnahmekammer 11 so zwischen die Transporträder 45a, 45b einzuführen, daß ein weiteres Vorziehen durch letztere gesichert ist, wobei vorher die vorragenden Verbindungsstreifen 9, 10 voneinander zu trennen und mit den zugehörigen Aufwickelrollen 48 zu verbinden sind. Bei einer Einschaltung der zugehörigen Abgabevorrichtung 31 werden die beiden Aufwickelrollen 48 und die Transporträder 45a, 45d um eine Wegstrecke angetrieben, die der vorgewählten Anzahl Eiskugeln 4 entspricht. Dabei werden die Verpackungsbänder oder -streifen 9, 10 an der Ablaufseite der Transporträder 45a, 45b kontinuierlich aufgerissen und die gewählte Anzahl der Aufnahmekammern 11 nacheinander geöffnet. Gleichzeitig wird die Abgabeöffnung 35 durch Verschieben des Schiebers 36 freigegeben. Dabei fällt jeweils die zugehörige Eiskugel 4 aufgrund der Schwerkraft durch die Abgabeöffnung 35 in den vorher darunter gestellten Eisbecher 38, ohne ein Bauteil des Abgabegerätes 30 zu berühren, was aus hygienischen Gründen erwünscht ist.

Das Aufreißen erfogt vorzugsweise an Schwächungslinien an der Verpackung 14, die insbesondere in der Teilungsebene der Aufnahmekammer 11a, 11b verlaufen und durch die Verbindungsnäthe 18, 19 gebildet sein können.

Sofern keine Querverbindungsnähte vorhanden sind, werden die Verpackungsstreifen 9, 10 nur soweit aufgerissen, daß zum einen die gewünschte Eiskugel 4 herausfällt. Die nächste Aufnahmekammer 11 jedoch soweit wie möglich geschlossen bleibt, um die darin befindliche Eiskugel 4 nicht nur am Herausfallen zu hindern, sondern auch zu schützen.

Sofern die bandförmige Verpackung 14 mit Querverbindungsnähten 19 versehen ist, ist es vorteilhaft, die Anordnung so zu treffen, daß in der Offenstellung einer zugehörigen Aufnahmekammer 24 bzw. in der Stellung, in der die Transporträder 45a, 45b nach einer Abgabebewegung stehen bleiben, die nächste Quer-Verbindungsnaht 19 geschlossen bleibt. Hierdurch ist ein optimaler Schutz für die nächste Aufnahmekammer 24 gewährleistet. Dies kann durch eine entsprechende Bemessung der Abstände a der Aufnahmekammern 11a, 11b von den Quer-Verbindungsnähten 19 unter Berücksichtigung der Abmessungen der Transporträder 45a, 45b in einfacher Weise erreicht werden.

Nach Abgabe der Eiskugeln 4 wird die Abgabeöffnung 35 selbsttätig wieder verschlossen. Der die Abgabeöffnung 35 verschließende Schieber ist vorzugsweise thermisch isoliert ausgeführt, sodaß das gesamte Innere des Abgabegerätes wie eine Tiefkühlschrank isoliert ist. Die Temperatur im Inneren des Abgabegerätes und insbesondere in der Gefrierkammer liegt vorzugsweise bei etwa -18 bis -20 °C.

Es ist vorteilhaft, dem Abgabegerät 30 eine weitere Abgabestelle 53 zur Abgabe eines Eis-Zusatzmittels, z. B. Sahne zuzuordnen, die bei der vorliegenden Ausgestaltung neben den vorhandenen Abgabevorrichtungen 31 angeordnet ist, wobei die Abgabeöffnung 54 für das Zusatzmittel in entsprechender Position neben der oder den Abgabeöffnungen 35 in der Deckenwand 41 angeordnet ist. Zu dieser Abgabeöffnung 54 führt eine Zuführungsleitung 55 für das Zusatzmittel von einem nicht dargestellten, vorzugsweise ebenfalls in der Gefrierkammer 32 angeordneten Vorratsbehälter. Die Abgabe des Zusatzmittels kann in entsprechender Weise durch Betätigung eines Betätigungselements 56 durch die vorhandene Steuereinrichtung gesteuert werden. Das Zusatzmittel kann aber auch, z.B. im Fall einer Cocktailsoße o. dgl., in einem separaten Behälter hinter oder unter dem Abgabegerät angeordnet sein und mittels einer Pumpe dosiert werden.

## Patentansprüche

1. Verfahren zum Verpacken von tiefgekühltem Lebensmittel, insbesondere Speiseeis, in eine bandförmige Verpackung (14), bei dem das Lebensmittel erst portioniert und dann die Portionen in einer Reihe hintereinander mit der bandförmigen Verpackung (14) zusammengeführt und von dieser umhüllt werden,
**dadurch gekennzeichnet**,
daß die Portionen des Lebensmittels in Längsabständen voneinander zwischen zwei getrennte Verpackungsstreifen (9, 10) aus folienartigem Material eingeführt werden, die danach zur Bildung der bandförmigen Verpackung (14) zusammengeführt werden.

2. Verfahren nach Anspruch 1,
**dadurch gekennzeichnet**,
daß die Portionen des Lebensmittels in Aufnahmekammern eingeführt werden, die in einem der beiden Verpackungsstreifen (9 bzw. 10) in gleichen Abständen (a) hintereinanderliegend angeordnet sind.

3. Verfahren nach Anspruch 1,
**dadurch gekennzeichnet**,
daß beide Verpackungsstreifen (9, 10) jeweils gleiche Abstände (a) voneinander aufweisende Aufnahmekammerhälften (11a, 11b) enthalten, wobei die Verpackungsstreifen (9, 10) dergestalt zusammengeführt werden, daß die Aufnahmekammerhälften sich jeweils paarweise gegenüberliegen und daß die Portionen des Lebensmittels in eine oder in beide Aufnahmekammerhälften (11a, 11b) eingeführt werden.

4. Verfahren nach einem der vorhergehenden Ansprüche,
**dadurch gekennzeichnet**,
daß die Portionen des Lebensmittels in mehreren Reihen nebeneinanderliegend zwischen die Verpackungsstreifen (9, 10) eingeführt werden.

5. Verfahren nach einem der vorhergehenden Ansprüche,
**dadurch gekennzeichnet**,
daß das Lebensmittel vor dem Einführen in die bandförmige Verpackung (14) beim oder nach dem Portionieren vorgeformt wird, vorzugsweise als Kugel (4).

6. Verfahren nach einem der vorhergehenden Ansprüche,
**dadurch gekennzeichnet**,
daß die Verpackungsstreifen (9, 10) nach dem Zusammenführen in ihren Randbereichen und/oder zwischen den Reihen in Längsrichtung durch Verbindungsnähte (18) miteinander verbunden werden, die jeweils einen Abstand von den Portionen aufweisen.

7. Verfahren nach einem der vorhergehenden Ansprüche,
**dadurch gekennzeichnet**,
daß die Verpackungsstreifen (9, 10) nach dem Zusammenführen an ihren Enden und/oder zwischen den Portionen durch quer verlaufende Verbindungsnähte (19) miteinander verbunden werden.

8. Bandförmige Verpackung (14) für Portionen von tiefgekühltem Lebensmittel insbesondere Speiseeis, bestehend aus zwei aneinanderliegenden Verpackungsteilen (9, 10), zwischen denen die Portionen in einer oder mehreren Reihen in Längsabständen hintereinander angeordnet sind.
**dadurch gekennzeichnet**,
daß die Verpackungsteile (9, 10) aus einem folienartigen Material bestehen und in ihren Randbereichen und/oder zwischen den Reihen in Längsrichtung durch Verbindungsnähte (18) miteinander verbunden sind, die jeweils einen Abstand von den Portionen aufweisen.

9. Bandförmige Verpackung nach Anspruch 8,
**dadurch gekennzeichnet**,
daß die Verpackungsteile (9, 10) an den Enden der Verpackung jeweils durch eine quer verlaufende Verbindungsnaht (19) und/oder durch zwischen den Portionen in einem Längsabstand davon verlaufende Querverbindungsnähte (19) miteinander verbunden sind.

10. Bandförmige Verpackung nach Anspruch 8 oder 9,
**dadurch gekennzeichnet**,
daß eines der beiden Verpackungsteile (9 bzw. 10) Aufnahmekammern für die Portionen aufweist oder daß beide Verpackungsteile (9, 10) einander gegenüberliegende Aufnahmekammerhälften (11a, 11b) für die Portionen aufweisen.

11. Vorrichtung zur Durchführung des Verfahrens nach einem der Ansprüche 1 bis 7 oder zur Herstellung einer bandförmigen Verpackung nach einem der Ansprüche 8 bis 10,
**gekennzeichnet durch**
eine Tiefkühlvorrichtung (2) zum Tiefkühlen und Portionieren eines Lebensmittels, eine erste Zuführungseinrichtung (7, 8) zum Zuführen zweier getrennter Verpackungsstreifen (9, 10) aus folienartigem Material zu einer Verpackungsstation (5),
eine zweite Zuführungsvorrichtung (6) zum Zuführen der Portionen des Lebensmittels zwischen die Verpackungsstreifen (9, 10) bei oder vor der Verpackungsstation (5), in der die Verpackungsstreifen (9, 10) unter Umhüllung der Portionen zusammengeführt werden, und
eine Verbindungsvorrichtung (13) zum Verbinden der Verpackungsstreifen (9, 10) durch Verbindungsnähte (18) in den Randbereichen in Längsrichtung und/oder durch Quernähte an den Enden und/oder durch zwischen den Portionen in Längsabständen (c) davon verlaufende Quernähte (19).

12. Vorrichtung nach Anspruch 11,
**dadurch gekennzeichnet**,
daß der Tiefkühlvorrichtung (2) oder der Fördervorrichtung (6) eine Vorrichtung zum Formen der Portionen zugeordnet ist.

13. Verfahren zum Auspacken von Portionen von tiefgekühltem Lebensmittel, insbesondere Speiseeis, aus einer bandförmigen Verpackung (14) nach einem der Ansprüche 8 bis 10,
**dadurch gekennzeichnet**,
daß die bandförmige Verpackung (14) in eine Trennvorrichtung (45a, 45b) eingezogen wird, in der die beiden Verpackungsteile (9, 10) aus folienartigem Material durch Aufreißen voneinander getrennt und separat abgeführt werden, wobei wenigstens eine Portion vollständig freigegeben und an einen Abnehmer (38) abgegeben wird.

14. Verfahren nach Anspruch 13,
**dadurch gekennzeichnet**,
daß die Verpackungsteile (9, 10) an Schwächungslinien, insbesondere bei an der Verpackung angebrachten Verbindungsnähten (18, 19) aufgerissen werden.

15. Vorrichtung zur Durchführung des Verfahrens nach Anspruch 13 oder 14, mit
- einem eine Gefrierkammer (32) umgebenden Gehäuse (30a) mit eigener Lagerstelle für einen Vorrat der bandförmigen Verpackung (14), insbesondere in seinem unteren Bereich,
- wenigstens einem Stellplatz (37) für ein Gefäß (38) zur Aufnahme wenigstens einer Portion (4),
- einer Abgabeöffnung (35) oberhalb des Stellplatzes (37),
- zwei Transporträdern (45a, 45b) zum Zuführen der bandförmigen Verpackung (14) zu einer über der Abgabeöffnung (35) angeordneten Stelle
- und zwei zu beiden Seiten der Räder (45a, 45b) gelagerten, angetriebenen Aufwickelrollen (46) zum Aufwickeln von zwei sich an der Ablaufseite der Räder (45ab, 45b) trennenden Verpackungsteilen (9, 10).

16. Vorrichtung nach Anspruch 15,
**dadurch gekennzeichnet**,
daß sie mehrere, nebeneinander angeordnete Abgabevorrichtungen (31a, 31b, 31c) für unterschiedliche Sorten des Lebensmittels aufweist.
